# EUROPÄISCHE PATENTANMELDUNG

(11) **EP 2 684 437 A1**
(43) Veröffentlichungstag der Anmeldung: **15.01.2014**
(21) Anmeldenummer: 13401053.7
(22) Anmeldetag: 03.06.2013
(51) Int. Cl.: A01C 15/00, F16B 39/00

(54) **Vorratsbehälter für landwirtschaftliche Verteilmaschinen**

(30) Priorität: 06.06.2012 DE 102012104895
(71) Anmelder: Amazonen-Werke H. Dreyer GmbH & Co. KG, 49205 Hasbergen (DE)
(72) Erfinder: Hofter, Rainer, 49143 Bissendorf (DE); Johannaber, Stefan Jan, 49536 Lienen (DE); Krabbe, Ulrich, 49205 Hasbergen (DE); Wiebusch, Thorsten, 49205 Hasbergen (DE)

(57) **Zusammenfassung**

Vorratsbehälter für landwirtschaftliche Verteilmaschinen, aus dem das zu verteilende Material bodenseitig austragbar und über zumindest eine Dosiereinrichtung wenigstens einem Verteilorgan zuführbar ist und dessen Aufnahmevolumen durch wenigstens ein Aufsatzelement (9) vergrößerbar ist und zu diesem Zwecke der obere Rand des Behälters (2) einen Flanschbereich (7) mit auf Abstand angeordneten Löchern (10) und das Aufsatzelement (9) an seinem unteren Rändern gleichfalls unter Bildung eines Flanschbereiches (8) mit Löchern (14) gleichen Abstandes ausgestaltet ist und das Aufsatzelement (9) mit dem Behälter (2) vorzugsweise unter Zwischenlage zumindest eines Dichtungsstreifens zwischen den Flanschelementen mittels derer Löcher durchgreifender Schrauben (13) verbindbar ist. Um eine vereinfachte und verbesserte Montage des Aufsatzelementes (9) auf dem Vorratsbehälter (2) zu schaffen, ist vorgesehen, dass die Löcher (10) des Flanschbereiches (7) des Behälters (2) einen Gewindebereich, in den die die Löcher durchgreifenden Schrauben (13) einschraubbar sind, aufweisen.

## Beschreibung

Die Erfindung betrifft einen Vorratsbehälter für landwirtschaftliche Verteilmaschinen gemäß des Oberbegriffes des Patentanspruches 1.

Ein derartiger Vorratsbehälter für landwirtschaftliche Verteilmaschinen ist in der DE 10 2005 034 282 A1 beschrieben. Zur Vergrößerung des Aufnahmevolumens des Vorratsbehälters wird auf den Vorratsbehälter ein Aufsatzelement aufgesetzt. Das Aufsatzelement wird durch verbinden der Flanschbereiche des Aufsatzelementes und des Behälters miteinander mittels der in den Flanschbereichen angeordneten Löchern und diese durchdringenden Schrauben auf den Vorratsbehälter befestigt. Die Schrauben wirken mit Gewinde aufweisenden Muttern zusammen. Die Muttern werden nach dem Aufsetzen des Aufsatzelementes auf dem Vorratsbehälter auf die Schrauben aufgeschraubt. Zur Montageerleichterung werden die Schrauben über einen Kunststoffkopf mit daran angeordneten Federbeinen vor der Montage des Aufsatzelementes auf dem Vorratsbehälter in die in den Flanschbereichen des Aufsatzelementes sich befindlichen Löchern eingeclipst. Bei dem Aufsetzen des Aufsatzelementes mit den Schrauben kann es bei dem Durchstecken der Schrauben durch die sich in dem Flanschbereich des Vorratsbehälters befindlichen Löchern zu Beschädigungen des Gewindes der Schrauben kommen.

Der Erfindung liegt die Aufgabe zu Grunde, eine vereinfachte und verbesserte Montage des Aufsatzelementes auf dem Vorratsbehälter zu schaffen.

Diese Aufgabe wird erfindungsgemäß dadurch gelöst, dass die Löcher des Flanschbereiches des Behälters einen

Gewindebereich, in den die die Löcher durchgreifenden Schrauben einschraubbar sind, aufweisen.

Infolge dieser Maßnahme werden auf die Schrauben nicht lose zu montierende Muttern aufgeschraubt, sondern die Schrauben werden erst nach dem Aufsetzen des Aussatzelementes auf den oberen Rand des Vorratsbehälters durch die sich in dem Flanschbereich befindlichen Löchern hindurch in den sich in dem Flanschbereich des Behälters jeweils sich befindlichen Gewindebereich eingeschraubt. Hierdurch wird eine einfache und vorteilhafte Montage und Befestigung des Aufsatzelementes auf dem Vorratsbehälter erreicht. Der die Muttern bildende Gewindebereich ist fest mit dem oberen Rand des Vorratsbehälters verbunden.

In vorteilhafter Weise kann der Gewindebereich von in dem Flanschbereich des Behälters in den Löchern angeordneten Nietmuttern gebildet werden.

Um die Schnittstelle zwischen dem Behälter und dem Aufsatzelement in einfacher Weise abdecken zu können, ist vorgesehen, dass auf der Außenseite des Behälters in dessen Flanschbereich ein zumindest teilweise den Behälter umschließendes Abdeckelement angeordnet ist, dass das Abdeckelement mittels der die Löcher durchgreifenden Schrauben befestigt ist. Somit kann in einfacher Weise das Abdeckelement auf der Außenseite des Behälters im Bereich der Schnittstelle zwischen dem Behälter und dem Aufsatzelement gleichzeitig mit dem das Aufsatzelement und den Behälter miteinander verbindenden Schrauben am Vorratsbehälter befestigt werden.

Hierbei weisen die die Löcher durchgreifenden Schrauben zumindest eine derartige Länge auf, so dass mit diesen Schrauben das Abdeckelement befestigbar ist.

Um in einfacher Weise Zusatzeinrichtungen an der Verteilmaschine befestigen zu können, ist vorgesehen, dass an den Abdeckelementen Zusatzeinrichtungen, wie Beleuchtungseinrichtungen, Warntafeln, etc. angeordnet sind. Weiterhin kann das Abdeckelement Befestigungseinrichtungen für Leitungen für Beleuchtung und/oder Betätigungseinrichtungen aufweisen.

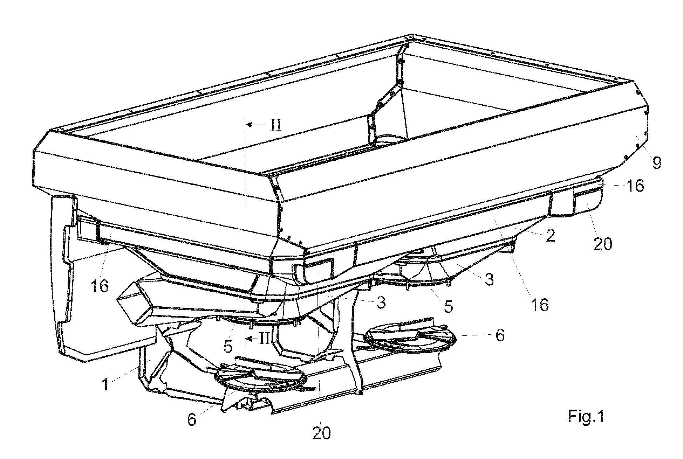

Weitere Einzelheiten der Erfindung sind der Beispielsbeschreibung zu entnehmen. Die Zeichnungen zeigen
- Fig.1: eine als Zentrifugaldüngerstreuer ausgebildete landwirtschaftliche Verteilmaschine mit Vorratsbehälter und Aufsatzelement in perspektivischer Darstellung,
- Fig.2: die Schnittstelle zwischen Vorratsbehälter und Aufsatzelement mit zugeordnetem Abdeckelement in der Ansicht II - II und perspektivischer Darstellung und
- Fig. 3: die Schnittstelle zwischen Vorratsbehälter und Aufsatzelementen mit zugeordneten Abdeckelement gemäß der Darstellung nach Fig. 2, jedoch in Explosionsdarstellung.

Die als Verteilmaschine gebildete landwirtschaftliche Vorrichtung zum Ausbringen von körnigem Material, beispielsweise Mineraldünger ist im Ausführungsbeispiel als Schleuderdüngerstreuer ausgestaltet. Der Streuer weist einen von Rahmenelementen 1 getragenen Grundvorratsbehälter 2 auf, der in zwei Auslauftrichter 3 ausmündet. Der Rahmen 1 ist auf seiner Vorderseite mit bekannten und daher nicht dargestellter Weise mit Dreipunktkupplungselementen zum Anbau an einen Dreipunktkraftheber eines Ackerschlepper ausgestattet. Der Vorratsbehälter 2 weist zwei durch ein dachförmiges Mittelteil4 voneinander geteilte Auslauftrichter 3 auf. An den unteren Enden der Auslauftrichter 3 sind Befestigungselemente für die Anordnung der die Auslauftrichter nach unten verschließende und einstellbare Dosiervorrichtungen 5 angeordnet. Über die Dosiervorrichtungen 5 wird das sich in dem Vorratsbehälter 2 befindliche Material in einstellbaren Mengen den unterhalb der Dosiervorrichtungen 5 angeordneten und rotierend angetriebenen Schleuderscheiben 6 zugeleitet.

An dem oberen umlaufenden Bereich 7, der einen Flanschbereich bildet, des Grundvorratsbehälters 2 ist ein einen unteren Flanschbereich 8 aufweisendes Aufsatzbehälterelement 9 zur Vergrößerung des Fassungsvermögens des Vorratsbehälters 2 angeordnet.

Der obere Bereich des Vorratsbehälters 2 ist als Flanschbereich 7 ausgebildet. In diesem Flanschbereich 7 sind im Abstand zueinander Löcher 10 anordnet. In diesem Löchern 10 sind in Nietmuttern 11 angeordnet, die einen Gewindebereich in den Löcher 10 des Flanschbereiches 7 des Behälters 2 bilden und in denen Schrauben 13 einschraubbar sind. Das Aufsatzelement 9 weist an seinem unteren Rändern ebenfalls einen Flanschbereich 8 auf. Diesem Flanschbereich 8 sind ebenfalls Löcher 14 beabstandet zueinander angeordnet. Der Abstand dieser Löcher 14 in dem Flanschbereich 8 des Aufsatzelementes 9 entspricht dem Abstand der Löcher 10 in dem Flanschbereich 7 des Vorratsbehälters 2. Die Flanschbereiche 7 und 8 des Aufsatzelementes 9 und des Vorratsbehälters 9 mit den darin angeordneten Löchern 10 und 14 sind deckungsgleich zueinander angeordnet, so dass nach dem zusammenfügen von Vorratsbehälter 2 und Aufsatzelement 9, wenn das Aufsatzelement 9 auf dem Vorratsbehälter 2 aufsetzt, die Löcher 10 und 14 miteinander fluchten. Gegebenenfalls kann zwischen dem Flanschbereich 7 des Vorratsbehälters 2 und dem Flanschbereich 8 des Aufsatzelementes 9 ein nicht dargestellter Dichtungsstreifen als Zwischenlage zur Abdichtung zwischen Aufsetzelement 9 und Vorratsbehälter 2 angeordnet werden.

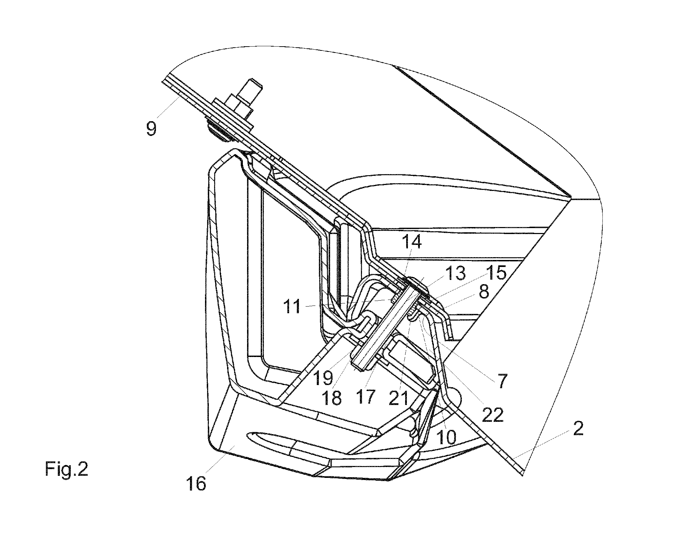

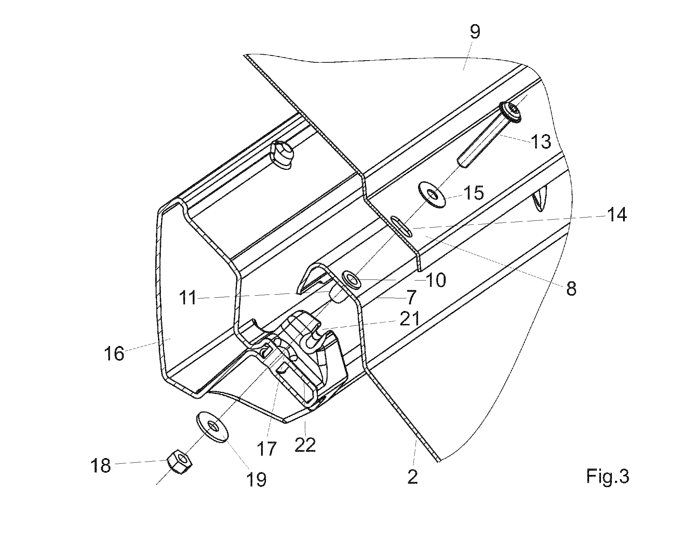

Zunächst wird zur Anordnung des Aufsatzelementes 9 auf dem Vorratsbehälter 2 zur Vergrößerung des Fassungsvermögens das Aufsatzelement 9 auf den Vorratsbehälter 2 aufgesetzt, so dass die Flanschbereiche 7 und 9 am einander anliegen. Gegebenenfalls kann zwischen den beiden Flanschbereichen 7 und 8 ein nicht dargestellter Dichtungsstreifen zwischen gelegt sein. Anschließend werden die Schrauben 13 unter Zwischenlage einer Scheibe 15 durch die Löcher 10 und 14 gesteckt und in das Gewinde der Nietmuttern 11 eingeschraubt, so dass mittels der Schrauben 13 das Aufsatzelement 9 auf dem Vorratsbehälter 2 befestigt ist. Um zusätzlich im Bereich der Schnittstelle zwischen Vorratsbehälter 2 und Aufsatzelement 9 ein dem Behälter 2 zumindest teilweise umschließendes Abdeckelement 16 anordnen zu können, weisen in die Schrauben 13, mit denen das Aufsatzelement 9 mit dem Vorratsbehälter 2 verschraubt ist, eine derartige Länge auf, dass mit diesen Schrauben 13 auch das Abdeckelement 16 zu befestigen ist, wie die Fig. 2 und 3 zeigen. Hierbei weist das Abdeckelement 166 entsprechende Löcher 17 auf, die von den Schrauben 13 durchgegriffen werden. Nach dem Aufschieben des Abdeckelementes 16 auf für die Schrauben 13 wird jeweils von der Unterseite eine Mutter 18 unter Zwischenlage einer Scheibe 19 auf die Schrauben 13 aufgeschraubt, so dass das Abdeckelement 16 an dem Behälter 2 befestigt ist.

An dem Abdeckelement 16 sind in teilweise nicht dargestellter Weise Zusatzeinrichtungen, wie Beleuchtungseinrichtungen 20, Warntafeln etc. anzuordnen bzw. angeordnet.

Weiterhin sind an dem Abdeckelement Befestigungseinrichtungen 21 für Leitungen für Beleuchtungen und/oder Betätigungseinrichtungen zugeordnet, die beispielsweise als Aussparungen in den Abstandshaltern 22 des jeweiligen Abdeckelementes 16 ausgebildet sind. In diesen Aussparungen 21 können dann die Leitungen in geschützter Weise verlegt werden.

## Patentansprüche

1. Vorratsbehälter für landwirtschaftliche Verteilmaschinen, aus dem das zu verteilende Material bodenseitig austragbar und über zumindest eine Dosiereinrichtung wenigstens einem Verteilorgan zuführbar ist und dessen Aufnahmevolumen durch wenigstens ein Aufsatzelement vergrößerbar ist und zu diesem Zwecke der obere Rand des Behälters einen Flanschbereich mit auf Abstand angeordneten Löchern und das Aufsatzelement an seinem unteren Rändern gleichfalls unter Bildung eines Flanschbereiches mit Löchern gleichen Abstandes ausgestaltet ist und das Aufsatzelement mit dem Behälter vorzugsweise unter Zwischenlage zumindest eines Dichtungsstreifens zwischen den Flanschelementen mittels derer Löcher durchgreifender Schrauben verbindbar ist, **dadurch gekennzeichnet, dass** die Löcher (10) des Flanschbereiches (7) des Behälters (2) einen Gewindebereich (11), in den die die Löcher (10) durchgreifenden Schrauben (13) einschraubbar sind, aufweisen.

2. Vorratsbehälter nach Anspruch 1, **dadurch gekennzeichnet, dass** der Gewindebereich in den Löchern (10) des Flanschbereiches (7) des Behälters (2) von in den Löchern (10) angeordneten Nietmuttern (11) gebildet wird.

3. Vorratsbehälter nach zumindest einem der vorstehenden Ansprüche, **dadurch gekennzeichnet, dass** auf der Außenseite des Behälters (2) in dessen Flanschbereich (7, 8) ein zumindest teilweise den Behälter (2) umschließendes Abdeckelement (16) angeordnet ist, dass das Abdeckelement (16) mittels der die Löcher (10, 14, 17) durchgreifender Schrauben (13) befestigt ist.

4. Vorratsbehälter nach Anspruch 3, **dadurch gekennzeichnet, dass** die die Löcher (10, 14, 17) durchgreifenden Schrauben (13) zumindest eine derartige Länge aufweisen, so dass mit diesen Schrauben (13) das Abdeckelement (16) befestigbar ist.

5. Vorratsbehälter nach zumindest einem der vorstehenden Ansprüche, **dadurch gekennzeichnet, dass** an den Abdeckelementen (16) Zusatzeinrichtungen, wie Beleuchtungseinrichtungen (20), Warntafeln, etc. angeordnet sind.

6. Vorratsbehälter nach zumindest einem der vorstehenden Ansprüche, **dadurch gekennzeichnet, dass** an dem Abdeckelement (16) Befestigungseinrichtungen (21) für Leitungen für Beleuchtung (20) und/oder Betätigungseinrichtungen zugeordnet sind.
